# EUROPEAN PATENT SPECIFICATION

(11) **EP 0 527 450 B1**
(45) Date of publication and mention of the grant of the patent: **02.11.1995**
(21) Application number: 92113492.0
(22) Date of filing: 07.08.1992
(51) Int. Cl.: F16C 33/10

(54) **Method of forming grooves on a shaft**
Verfahren zur Herstellung von Rillen auf einer Achse
Méthode pour réaliser des rainures sur un axe

(30) Priority: 08.08.1991 JP 223460/91; 08.08.1991 JP 223508/91; 01.10.1991 JP 280411/91; 02.10.1991 JP 282283/91
(43) Date of publication of application: 17.02.1993
(73) Proprietor: CANON KABUSHIKI KAISHA, Tokyo (JP)
(72) Inventor: Yoshida, Fumio, c/o Canon Kabushiki Kaisha, Ohta-ku, Tokyo (JP)
(74) Representative: Weser, Wolfgang

(56) References cited:
- GB-A- 2 176 545
- US-A- 4 226 686
- US-A- 4 599 147
- US-A- 4 636 285
- PATENT ABSTRACTS OF JAPAN vol. 10, no. 193 (M-496)(2249) 8 July 1986 & JP A 61 038 217
- PATENT ABSTRACTS OF JAPAN vol. 14, no. 100 (C-0693)23 February 1990 & JP A 01 306 578
- PATENT ABSTRACTS OF JAPAN vol. 11, no. 176 (C-426)5 June 1987 & JP A 62 001 886
- DATABASE WPIL Week 8631, Derwent Publications Ltd., London, GB; AN 86-199862 & JP A 61 130 490
- PATENT ABSTRACTS OF JAPAN vol. 14, no. 100 (C-0693)23 February 1990 & JP A 01 306 579
- DATABASE WPIL Week 8216, Derwent Publications Ltd., London, GB; AN 82-32178E & JP A 57 045 089
- PATENT ABSTRACTS OF JAPAN vol. 14, no. 106 (C-0694)27 February 1990 & JP A 01 309 980
- PATENT ABSTRACTS OF JAPAN vol. 12, no. 4 (M-657)8 January 1988 & JP A 62 167 923

## Description

The present invention relates to a method of forming grooves in a dynamic pressure fluid bearing. Such bearing is adapted for use in a light deflecting device of a laser beam printer or the like.

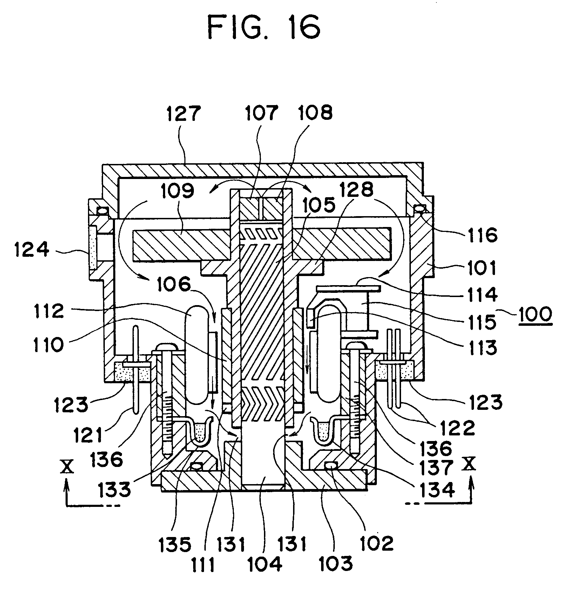

In particular, the present invention relates to a method of forming grooves on curved surface of a rotary shaft 105, employed in a motor with a dynamic pressure fluid bearing shown in Fig. 16.

Said motor shown in Fig. 16 is disclosed in the U.S. Patent No. 5,097,164.

Referring to Fig. 16, a flange member 103 is sealably fixed through an O-ring 102 on a bottom face of an outer tube 101 by bolts or the like. A fixed shaft 104 extending into the interior of the motor is fixed in a central hole of said flange member 103 by shrinkage fitting.

On the curved surface of said fixed shaft 104 there are provided grooves 105 of herring bone grooves or spiral grooves. A rotary sleeve 106 is rotatably fitted around the shaft 104 with a gap of 2 to 20 µm therebetween. Inside said rotary sleeve 106 and close to the upper end face of said fixed shaft 104, there is fitted a thrust bearing 108 having a constriction hole 107 at the center. Also, at the lower end portion of said rotary sleeve 106, there is provided a suction hole (including a notch or a slit) 131 for introducing the air inside the casing to the curved surface of said fixed shaft 104 (inside the rotary sleeve 106).

A dynamic pressure fluid bearing utilizing air or nitrogen gas as the medium is constituted by the internal face of said rotary sleeve 106, the curved surface of said fixed shaft 104, the thrust bearing 108 and the suction hole 131.

A polygon mirror 109 is fixed by pressing or with screws on an upper flange 128 of said rotary sleeve 106. Magnets 110, constituting the rotor of the motor, are fixed by adhesion on the lower curved surface of said rotary sleeve 106. A balance ring 111 for dynamic balance is fixed on an end face of said rotor magnets 110.

Opposed to the magnets 110, there is provided a stator 112 which is fixed to the outer tube 101, and a Hall element 113 for detecting the variation in the magnetic field and a Hall element (not shown) for detecting the revolution for PLL control are fixed to the stator 112 by means of a printed circuit board 114 and a holder 115, and these components constitute rotary driving means.

On the outer tube 101, there is hermetically fixed, for example by adhesion, a glass window 124 for introducing and emitting laser beams subjected to deflection by the polygon mirror 109.

On said outer tube 101, there is hermetically fixed, across an O-ring 116, a cap member 127 constituting a part of the casing divided for facilitating the assembly.

Also, on said outer tube 101, connector members 121, 122 for connecting the electric wirings of the motor with the external circuit are sealed on said outer tube with sealant or adhesive 123, so that the interior of the motor casing is completely sealed from the exterior.

For activating the motor, a current is given to the coils of the stator 112, whereby the rotary sleeve 106 starts to rotate in a predetermined direction by the magnetic repulsive and attractive forces of the magnets 110.

As a result, because of the air flow between the grooves 105 of the fixed shaft 104 and the internal surface of the rotary sleeve 106, the air in the casing flows from the entrance 131 formed at the lower end of the rotary sleeve 106 into the space around the fixed shaft 104, and further flows along the grooves 105 formed on the fixed shaft 104, thereby generating a pressure in the radial direction.

Also, a pressure is generated in the thrust direction by constriction of air flow by the hole 107 of the upper thrust bearing 108.

Consequently, the rotary sleeve 106 continues to rotate without contacting the fixed shaft 104 both in the radial and thrust directions.

The shaft of the above-explained dynamic pressure fluid bearing is provided with fine grooves for generating the dynamic pressure, and the precision of said grooves and the surfacial precision of the curved surface of the shaft are important factors governing the rotational reliability of the bearing. For this reason, there have been proposed following methods for forming said grooves.

A first method for forming the grooves for dynamic pressure generation consists of coating a resist on the curved surface of a shaft member with polished surface, excluding areas where the grooves are to be formed, and etching the areas not coated with the resist (JP-A-1306579).

GB-A-2176545 discloses to form grooves of a dynamic pressure fluid bearing by printing a resist material on a shaft and electrochemically polishing prior to removing the resist material.

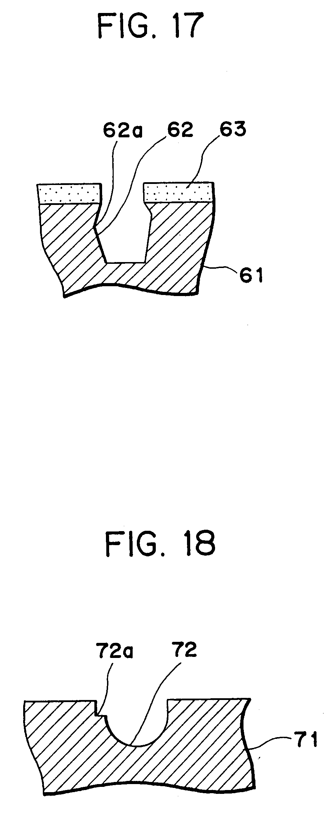

Fig. 17 is a schematic cross-sectional view of a dynamic pressure generating groove formed by such etching, and an undercut 62a is formed on the internal wall, close to the aperture of a dynamic pressure generating groove 62, formed on the curved surface of the shaft 61.

A further method utilizes rolling. As shown in Fig. 18, a dynamic pressure generating groove 72 formed by this method on a shaft 71 often shows a shoulder 72a at the aperture of said groove.

A still further method consists of forming a film of a material capable of easily absorbing a laser beam on the curved surface of a shaft material, and forming grooves for dynamic pressure generation by eliminating said film with a laser beam, as disclosed in the Japanese Patent Laid-open Application No. 62-1886.

The prior arts explained above have been associated with the following drawbacks.

The method based on etching involves a high cost, because the shaft surface has to be finished, for example, by polishing, in order to obtain a predetermined surface precision. Also, the method based on rolling provides grooves which are complex in the cross-sectional shape and are not constant in the cross-sectional area along the longitudinal direction, because of the shoulder formation. Consequently, the dynamic pressure fluctuates during rotation, and the shaft shows fluctuation in revolution and vibration. Also, the method utilizing the laser beam involves a high cost, because of the complexity of the apparatus required.

The object of the present invention is to provide a method of forming grooves for a dynamic pressure fluid bearing, capable of providing a predetermined surfacial precision without the surface finishing of the shaft, and forming highly precise grooves which are constant in the cross-sectional shape and area in any position in the longitudinal direction of the grooves.

The above-mentioned object can be attained, according to the present invention, by a method having the features of claim 1.

### BRIEF DESCRIPTION OF THE DRAWINGS

Figs. 1 to 3D illustrate a first embodiment of the present invention, wherein:
Fig. 1 is a schematic plan view showing a state in which a resist is printed on a shaft core member bearing a plated layer, as a step of the method of the present invention;
Fig. 2 is a schematic lateral view of a gravure offset printing machine for printing a resist used in a step of the method of the present invention;
Figs. 3A to 3D illustrate steps of the method of the present invention, wherein:

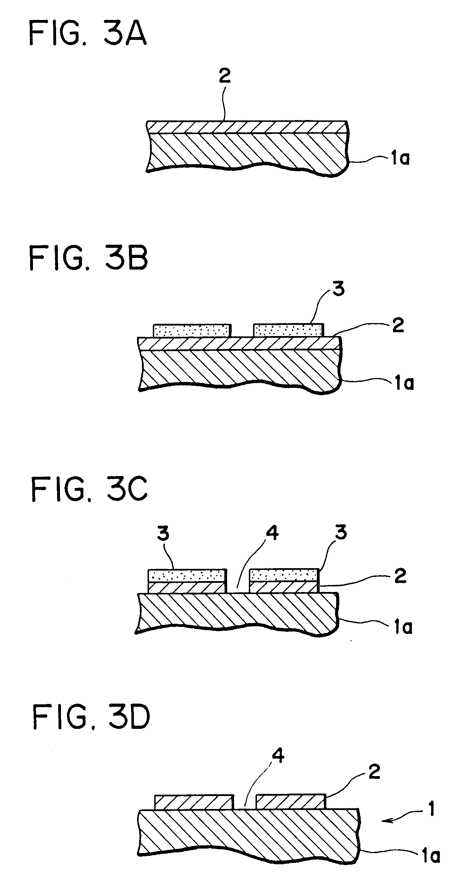

Fig. 3A is a schematic cross-sectional view of a state in which a plated layer is formed on the shaft core member;
Fig. 3B is a schematic cross-sectional view of a state in which a resist is printed on the curved surface of the plated layer;
Fig. 3C is a schematic cross-sectional view of a state in which the plated layer has been removed by etching in areas where the dynamic pressure generating grooves are to be formed; and
Fig. 3D is a schematic cross-sectional view of a state in which the resist has been removed;

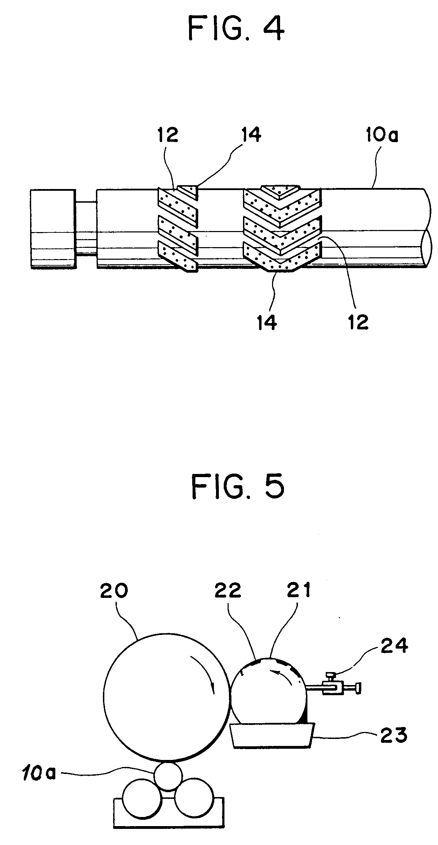

Figs. 4 to 9 illustrate a second embodiment of the present invention, wherein:
Fig. 4 is a schematic partial plan view of a state in which the resist material is printed on the shaft core member, as a step of the method of the present invention;
Fig. 5 is a schematic lateral view of a gravure offset printing machine for printing a resist, used in a step of the method of the present invention;

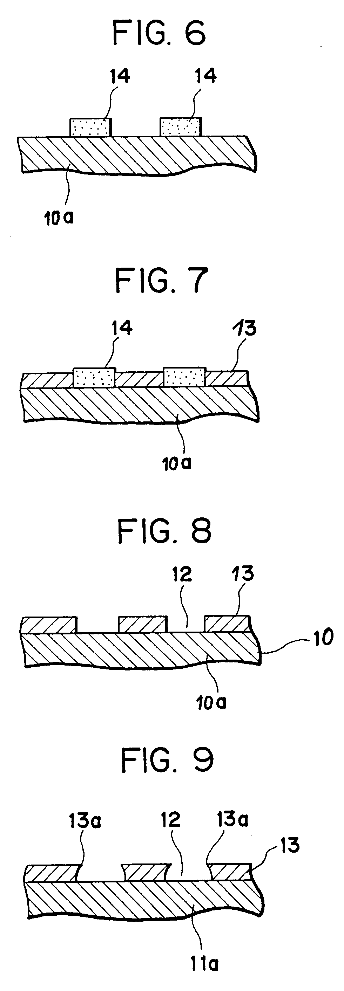

Fig. 6 is a schematic cross-sectional view of a state in which the resist is printed on the shaft core member, as a step of the method of the present invention;
Fig. 7 is a schematic cross-sectional view of a state in which the plated layer is formed on the shaft core member, as a step of the method of the present invention;
Fig. 8 is a schematic cross-sectional view of a state in which the plated layer 4 is left by the removal of the resist, as a step of the method of the present invention;
Fig. 9 is a schematic cross-sectional view of the dynamic pressure generating grooves in which the plated layer is formed by electrolytic plating, in the second embodiment of the present invention;

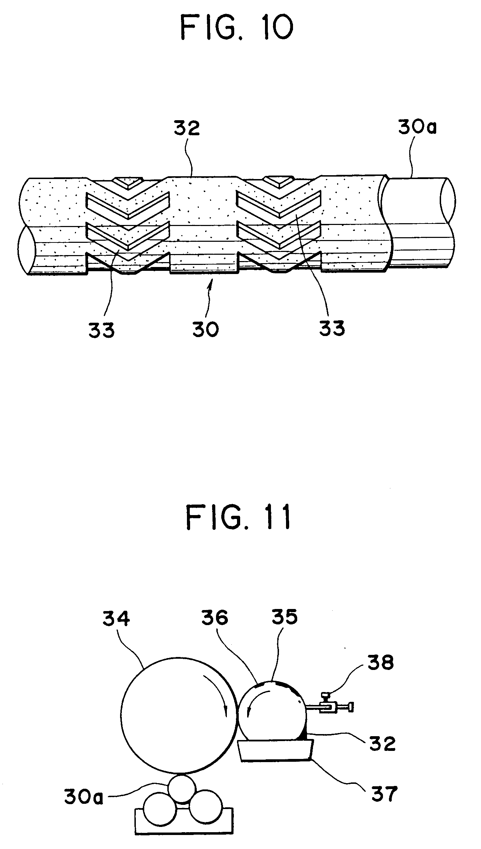

Figs. 10 and 11 illustrate a third embodiment of the present invention, wherein:
Fig. 10 is a schematic partial plan view of a shaft provided with dynamic pressure generating grooves, prepared according to the method of the present invention;
Fig. 11 is a schematic lateral view of a gravure offset printing machine for printing a surface coating material, in a step of the method of the present invention;

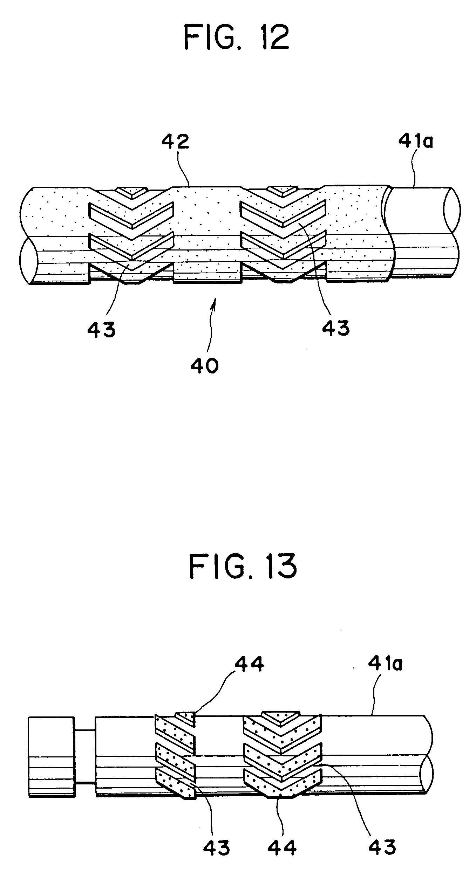

Figs. 12 to 15 illustrate a fourth embodiment of the present invention, wherein:
Fig. 12 is a schematic partial plan view of a shaft provided with dynamic pressure generating grooves, prepared by the printing method for the coating material of the present invention;
Fig. 13 is a schematic partial plan view of a state in which the resist is printed on the shaft core member, as a step employing the printing method for the coating material of the present invention;

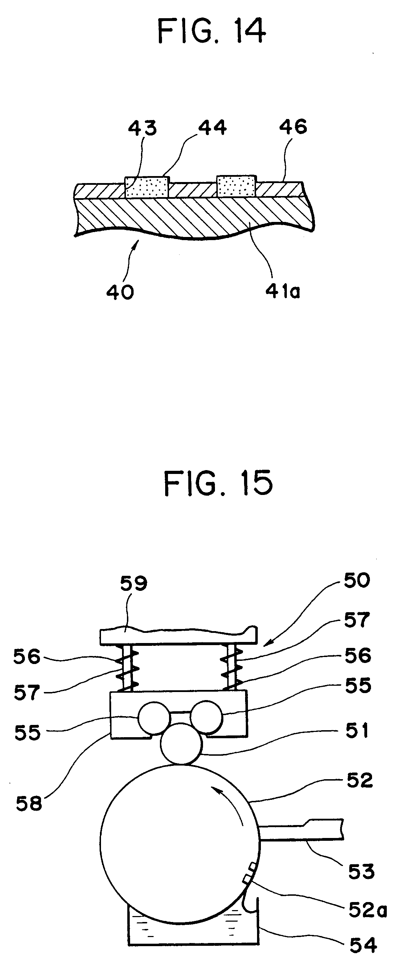

Fig. 14 is a schematic cross-sectional view of a state in which the plated layer is formed on the shaft core member, as a step of the method of the present invention;
Fig. 15 is a schematic view of a printing machine employed in the method of the present invention;
Fig. 16 is a cross-sectional view of a motor employing a shaft prepared by the method of the present invention;
Fig. 17 is a schematic cross-sectional view of a groove formed by etching; and
Fig. 18 is a schematic cross-sectional view of a groove formed by rolled working.

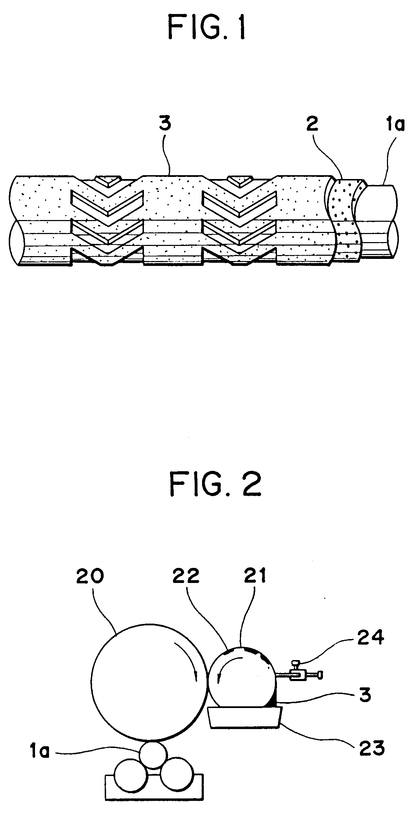

The embodiments according to figures 1 to 9 and 13 to 18 are not concerned by the invention as defined in claim 1.

### DESCRIPTION OF THE PREFERRED EMBODIMENTS

In the following there will be explained a first embodiment of the present invention, with reference to the attached drawings.

Figs. 1 to 3D are views showing the steps of said embodiment.

As shown in Fig. 3A, a shaft core member 1a of a radius determined by subtracting the depth of the dynamic pressure generating grooves 4 from the radius of the completed shaft 1 is prepared in advance. After ordinary washing and surface activation in succession, anti-abrasive hard electroless plating is conducted to form a plated layer 2 of a thickness equal to the depth of said dynamic pressure generating grooves 4.

Then, after the shaft core member 1a having the plated layer 2 formed is rinsed and dried, a resist 3 is printed, as shown in Fig. 3B, on the curved surface of the plated layer 2, excluding areas where the dynamic pressure generating grooves 4 (cf. Fig. 3D) are to be formed. Fig. 1 shows a state after the printing of the resist 3. An example of said resist is epoxy resin-based ink supplied by Tampoprint GmbH, Germany.

Said resist 3 can be conveniently printed by a gravure offset printing machine as shown in Fig. 2. The resist 3 supplied from a resist supply unit 23 to a gravure roll 21, is accommodated in a recessed plate 22 by a doctor blade 24, then transferred onto an offset roller 20 and printed onto the curved surface of the plated layer 2 of the shaft core member 1a.

After the printed resist is hardened, the plated layer 2 is removed by etching in areas where the dynamic pressure generating grooves are to be formed, as shown in Fig. 3C. Said resist material 3 is then removed as shown in Fig. 3D to obtain the shaft 1 equipped with the dynamic pressure generating grooves 4.

### [Example]

A shaft core member of stainless steel having diameter of 3.99 mm was subjected to alkali washing and surface activation with hydrochloric acid in succession. After removal of the surfacial oxide film on stainless steel, said shaft core member was immersed in a nickel bath and subjected to so-called nickel striking for depositing a nickel film by an electric current. Subsequently, anti-abrasive hard electroless plating of cobalt-phosphor alloy (pH 9.2, 90°C) was conducted for 50 minutes to obtain a plated layer of a thickness of 5 ± 0.5 µm.

In the above-explained example, nickel striking was conducted because the shaft core member was made of stainless steel, but it is not necessary in the case the shaft core member is made of carbon steel or the like.

Preferred examples of the anti-abrasive hard electroless plating, other than that explained above, are nickel-tungsten-boron alloy (pH 6.5, 65°C, 60 minutes) and nickel-boron alloy (pH 6.5, 65°C, 45 minutes). There may also be employed nickel-phosphor alloy (pH 4.5, 90°C, 15 minutes) or tetrafluoroethylene-containing nickel alloy (pH 5.1, 90°C, 30 minutes).

The present embodiment explained above provides following advantages. It allows to optionally select the shape of the dynamic pressure generating grooves, and also to optionally select the depth of said grooves by regulating the thickness of the plated layer. Also, the manufacturing cost can be reduced since the surface finishing is not required after removal of the resist.

In addition there can be obtained a shaft with satisfactory durability by forming the plated layer with hard electroless plating.

In the following there will be explained a second embodiment of the present invention.

As shown in Figs. 4, 6 and 8, a shaft core member 10a of a radius determined by subtracting the depth of the dynamic pressure generating grooves from the radius of the completed shaft 10 is prepared. After degreasing, a resist 14 serving as a coating for preventing the deposition of the plated layer is printed on said shaft core member 10a in areas where the grooves 12 are to be formed with a thickness corresponding to the depth of said grooves.

Said printing can be conveniently conducted with a gravure offset printing machine as shown in Fig. 5. The resist 14 supplied from a resist supply unit 23 equipped with a doctor blade 24 to recessed patterns 22 of a gravure roll 21, is transferred onto an offset roller 20 and is printed on the curved surface of the shaft core member 10a.

After the printed resist 14 is hardened by baking, there are conducted ordinary steps of washing, surface activation and nickel striking in succession, and then anti-abrasive hard electroless plating is conducted to obtain a plated layer 13 of a predetermined thickness.

Then, after rinsing and drying the resist 14 is removed to form the above-mentioned grooves 12. Said removal of the resist material is conducted by immersion in solution of an organic acid, such as a monocarboxylic acid.

In the following there will be explained another embodiment. Fig. 9 is a schematic cross-sectional view, showing the cross-sectional shape of a dynamic pressure generating groove formed by electrolytic plating instead of the above-mentioned anti-abrasive hard electroless plating. In this embodiment, a projection 13a is formed at the edge of the aperture of the dynamic pressure generating groove 12. Said projection 13a has to be removed in a post-working step. Other steps can be same as those in the foregoing embodiment.

### [Example]

A shaft core member of stainless steel having diameter of 3.99 mm was prepared. After degreasing with alkali solution, a resist was printed with a thickness of 5 µm or larger in areas on the curved surface of said shaft core member where the grooves were to be formed.

Said resist was preferably composed of epoxy ink, or ceramic ink known under a trade name of Printon PI Series of Nippan Kenkyusho, in consideration of the printability, resistance to acids and alkalis, adhesion to the shaft core member and easiness of removal after plating.

After the printed resist was hardened by baking (20 minutes at 150°C), there were conducted the known steps of alkali washing, surface activation with hydrochloric acid and nickel striking, and anti-abrasive hard electroless plating of cobalt-phosphor alloy (pH 9.2, 90°C) was conducted for 30 minutes to obtain a plated layer of a thickness of 5 ± 0.5 µm.

In the above-explained example, the nickel striking was conducted because the shaft core member was composed of stainless steel, but it is not necessary if the shaft core member is of carbon steel or the like.

Also, for the anti-abrasive hard electroless plating, there may be employed nickel-tungsten-boron alloy (pH 6.5, 65°C, 60 minutes) or nickel-boron alloy (pH 6.5, 65°C, 60 minutes) instead of the one explained above.

The present embodiment explained above can provide following advantages.

It allows to select an optional shape for the dynamic pressure generating grooves and to form highly precise grooves having constant cross-sectional shape and area in any position along the longitudinal direction of said grooves. Also, the depth of said grooves can be optionally selected by regulating the thickness of the plated layer.

Also, the plated layer prepared by hard electroless plating improves the finishing of the aperture of grooves, thereby eliminating the necessity for post-working and providing a shaft with satisfactory durability.

In the following there will be explained a third embodiment of the present invention, in which an anti-abrasive surface coating material is coated on the curved surface of a shaft core member, excluding areas where the dynamic pressure generating grooves are to be formed, and said surface coating material is then hardened.

Fig. 10 is a schematic partial plan view of a shaft with dynamic pressure generating grooves, prepared according to the present embodiment.

At first there is prepared a shaft core member 30a of a radius determined by subtracting the thickness of the anti-abrasive surface coating material 32 from the radius of the shaft 30. An anti-abrasive surface coating material 32 is coated on the curved surface of the shaft core member 30a, excluding areas where the dynamic pressure generating grooves 33 are to be formed, and said surface coating material 32 is hardened to form said grooves 33, thereby completing the dynamic pressure generating shaft 30.

Said surface coating material 32 is preferably printed for example by a gravure offset printing machine as shown in Fig. 11. The surface coating material 32, supplied from a supply unit 37 equipped with a doctor blade 38 to recesses 36 of a gravure roller 35, is transferred to an offset roller 34, and is continuously printed on the curved surface of the shaft core member 30a.

Said surface coating material may also be printed by a letterpress offset printing.

### [Example]

A stainless steel rod was machined to a diameter of 3.99 mm to obtain a shaft core member.

Said shaft core member was subjected to alkali degreasing and surface activation with hydrochloric acid, and then an inorganic coating material consisting of a metal alkoxyd was coated with a thickness of 5 ± 0.5 µm on the curved surface of said shaft core member, excluding areas where the dynamic pressure generating grooves were to be formed. Said inorganic coating material was, for example, ceramic ink known under a trade name "Printon PI Series" of Nippan Kenkyusho, or a ceramic coating material known under a trade name "Ceramica" of Nippan Kenkyusho.

The shaft core member coated with the above-mentioned inorganic coating material was heated for 20 minutes at 150°C in an electric furnace thereby hardening said inorganic coating material and thus completing the shaft.

The temperature and time of heating of said inorganic coating material are generally in ranges of 60° to 150°C and 10 minutes to 24 hours, depending on the kind of the inorganic coating material.

The ceramic ink and ceramic coating material mentioned above, having anti-abrasive property, heat resistance and chemical resistance, can provide a shaft excellent in these properties.

In addition to the electric furnace mentioned above, there may also be employed a far infrared furnace or an electron beam furnace, suitably according to the kind of the surface coating material.

The present embodiment explained above can provide following advantages.

It allows to optionally select the shape of the dynamic pressure generating grooves and to form highly precise grooves which are constant in the cross-sectional shape and area in any position in the longitudinal direction of the grooves.

Also the depth of the grooves can be optionally selected by regulating the thickness of the anti-abrasive surface coating material at the printing thereof. Thus, the present embodiment facilitates the preparation of shaft and leads to a cost reduction thereof.

In the following there will be explained an embodiment for said fourth object.

Fig. 12 is a schematic partial plan view of a shaft with dynamic pressure generating grooves according to the present embodiment.

There is at first prepared a shaft core member 41a of a radius determined by subtracting the thickness of the anti-abrasive surface coating material 42 from the radius of the shaft 40. The anti-abrasive coating material is coated on the curved surface of said shaft core member 41a, excluding areas where the dynamic pressure generating grooves 43 are to be formed, and the surface coating material 42 is then hardened to form said grooves 43, thereby completing the dynamic pressure generating shaft 40.

In another embodiment, as shown in Figs. 13 and 14, there is prepared a shaft core member 41a of a radius determined by subtracting the depth of the dynamic pressure generating grooves 43 from the radius of the shaft 41, and then a resist 44 for preventing the deposition of a plated layer is coated on said shaft core member 41a with a thickness at least equal to the depth of said grooves in areas where said grooves are to be formed.

After the resist 44 is hardened by baking, plating is conducted to form a plated layer 46 as shown in Fig. 14. After said plated layer 46 is formed with a thickness corresponding to the depth of said grooves, the resist 44 is removed, leaving the plated layer 46 and thus completing the shaft 40.

In the following there will be explained the printing method for the resist of the present embodiment.

Fig. 15 is a schematic view of a gravure printing machine employed in the present embodiment.

The resist is filled in a supply unit 54. A printing roller 52 having recessed portions 52a in the form of the desired grooves is provided above the unit 54. When the printing roller 52 is rotated in a direction indicated by an arrow, the resist is supplied from the supply unit 54 to said printing roller 52. After being uniformly flattened in the recesses 52a by a doctor blade 53, the resist is transferred onto the curved surface of the shaft core member 51 pressed by a predetermined pressure by means of a pressurizing unit 50 to be explained later.

The pressurizing unit 50 is constructed in the following manner.

A yoke 59 is provided with plural guide rodes 57, of which free ends are fitted in guide holes (not shown) of a work support member 58, and are equipped with known stoppers at the ends. The work support member 58 rotatably supports a pair of pressure rollers 55, and plural springs 56 provided between the yoke 59 and the work support member 58 constantly bias said work support member 58 toward the printing roller 52. Thus, the shaft core member 51 positioned between the paired pressure rollers 55 of the pressurizing unit 50 and the printing roller 52, is constantly pressed under a predetermined pressure to the printing roller 52 by means of the elastic force of said springs 56. Said pressure can be adjusted to a desired value by varying the pressure of the springs 56.

Consequently, when the printing roller 52 is rotated anticlockwise, as indicated by an arrow, the shaft core member 51 rotates clockwise, and the paired pressure rollers 55 elastically press the shaft core member 51 toward the printing roller 52, while rotating anticlockwise. Thus, even if the shaft of the printing roller 52 vibrates, the work support member 58 and the paired pressure roller 55 displace, corresponding to said shaft vibration and against the elastic force of said springs 56, thereby pressing the shaft core member 51 toward the printing roller 52 under a constant pressure. Consequently, the resist contained in the recesses 52a is transferred to the curved surface of the shaft core member 51 with a uniform thickness.

In case the printing roller 52 is composed of a relatively easily deformable material such as silicone rubber, the recesses 52a generate an error by deformation under the above-mentioned pressure. In such case, the shape of the recesses 52a is so formed as to incorporate the error resulting the deformation under said pressure, so that the grooves transferred to the shaft core member 51 can be obtained with the desired precision.

### [Example 1]

A shaft core member was prepared by machining a stainless steel rod to a diameter of 3.99 mm.

Said shaft core member was subjected to alkali degreasing and surface activation with hydrochloric acid, and then an inorganic coating material consisting of a metal alkoxyd was printed by the above-explained printing method on the curved surface of said shaft core member, excluding areas where the dynamic pressure generating grooves were to be formed, with a thickness of 5 ± 0.5 µm.

Said inorganic coating material was for example ceramic ink known under a trade name "Printon PI Series" of Nippan Kenkyusho or ceramic coating material known under a trade name "Ceramica" of Nippan Kenkyusho.

The shaft core member with said printed inorganic coating material was heated for 20 minutes at about 150°C in an electric furnace, whereby said inorganic coating material was hardened.

The temperature and time of heating of said inorganic coating material are generally in ranges of 60° to 150°C and 10 minutes to 24 hours, depending on the kind of the inorganic coating material.

The ceramic ink or ceramic coating material mentioned above can provide a shaft excellent in anti-abrasion property, heat resistance and chemical resistance.

In addition to the electric furnace mentioned above, there may also be employed a far infrared furnace or an electron beam furnace, suitably according to the kind of the surface coating material.

### [Example 2]

A shaft core member of stainless steel having diameter of 3.99 mm was prepared and degreased with alkali solution, and then a resist was printed with a thickness of 5 µm or larger, in areas on the curved surface of the shaft core member, where the grooves were to be formed.

Said resist was preferably epoxy ink or ceramic ink known under a trade name "Printon PI Series" of Nippan Kenkyusho, in consideration of the printability, resistance to acids and alkalis, adhesion to the shaft core member, and easiness of removal after plating.

After the printed resist was hardened by baking (20 minutes at 150°C), the shaft core member was subjected to the steps of alkali washing, surface activation with hydrochloric acid and nickel striking, and anti-abrasive hard electroless plating of cobalt-phosphor alloy (pH 9.2, 90°C) was conducted for 50 minutes to obtain a plated layer with a thickness of 5 ± 0.5 µm.

The nickel striking was conducted in this example because the shaft core member was made of stainless steel, but it is not necessary if the shaft core member is made of carbon steel or the like.

Other preferred examples of the anti-abrasive hard electroless plating are nickel-tungsten-boron alloy (pH 6.5, 65°C, 60 minutes) and nickel-boron alloy (pH 6.5, 65°C, 45 minutes). There may also be employed nickel-phosphor alloy (pH 4.5, 90°C, 15 minutes) or tetrafluoroethylene-containing nickel-phosphor alloy (pH 5.1, 90°C, 30 minutes).

The present embodiment explained above can provide following advantages.

It allows to optionally select the shape of the dynamic pressure generating grooves and to form highly precise grooves which are constant in the cross-sectional shape and area in any position in the longitudinal direction of the grooves.

These advantages are attained also when the printing roller is made of a deformable material.

## Claims

1. A method of forming grooves for a dynamic pressure fluid bearing, comprising the steps of
- printing an anti-abrasive surface coating material (32) on a curved surface of a shaft core member (30a), other than areas where the dynamic pressure generating grooves (33) are to be formed, and
- hardening said surface coating material (32), thereby forming said grooves (33).

2. A method according to claim 1,
wherein said anti-abrasive surface coating material (32) is an inorganic coating material composed of a metal alkoxyd.

3. A method according to claim 1,
wherein upon printing of the coating material (32) for forming the grooves (33), said shaft core member (30a) is pressed under a predetermined pressure to an offset roller (34) to which the coating material (32) is supplied in the defined pattern.

## Patentansprüche

1. Verfahren zum Bilden von Rillen für ein dynamisches Druckfluidlager, mit den Schritten des
- Druckens eines antiabrasiven Oberflächenbeschichtungsmaterials (32) auf eine gekrümmte Oberfläche eines Achsenkernteils (30a) mit Ausnahme der Gebiete, wo die Rillen (33) für das dynamische Druckfluidlager gebildet werden sollen, und
- Härten des Oberflächenbeschichtungsmaterials (32), wodurch die Rillen (33) gebildet werden.

2. Verfahren nach Anspruch 1,
wobei das antiabrasive Oberflächenbeschichtungsmaterial (32) ein aus einem Metall-Alkoxid gebildetes anorganisches Beschichtungsmaterial ist.

3. Verfahren nach Anspruch 1,
wobei beim Drucken des Beschichtungsmaterials (32) zum Bilden der Rillen (33) das Achsenkernteil (30a) unter einem vorbestimmten Druck an einer Offsetwalze (34) angedrückt wird, auf die das Beschichtungsmaterial (32) in dem definierten Muster aufgebracht wird.

## Revendications

1. Procédé pour former des rainures pour un roulement à fluide de pression dynamique, comprenant les étapes qui consistent:
- à imprimer un matériau (32) de revêtement de surface anti-abrasif sur une surface incurvée d'un élément (30a) formant âme d'arbre, ailleurs que dans des zones dans lesquelles les rainures (33) générant une pression dynamique doivent être formées; et
- à durcir ledit matériau (32) de revêtement de surface, afin de former lesdites rainures (33).

2. Procédé selon la revendication 1,
dans lequel ledit matériau (32) de revêtement de surface anti-abrasif est un matériau de revêtement inorganique composé d'un alkoxyde de métal.

3. Procédé selon la revendication 1,
dans lequel, lors de l'impression du matériau (32) de revêtement pour former les rainures (33), ledit élément (30a) formant âme d'arbre est appuyé, sous une pression prédéterminée, contre un rouleau (34) d'offset sur lequel le matériau (32) de revêtement est appliqué suivant un motif défini.
